# EUROPEAN PATENT APPLICATION

(11) **EP 0 985 489 A2**
(43) Date of publication of application: **15.03.2000**
(21) Application number: 99117779.1
(22) Date of filing: 09.09.1999
(51) Int. Cl.: B23Q 11/08, B23Q 39/02

(54) **A machine with two spindle heads and cover apparatus therefor**

(30) Priority: 10.09.1998 JP 27247298; 10.09.1998 JP 27247398
(71) Applicant: TOYODA KOKI KABUSHIKI KAISHA, Kariya-shi Aichi-ken (JP)
(72) Inventor: Uetake, Shinji, Kariya-shi, Aichi-ken (JP); Michihibo, Suzuki, Kariya-shi, Aichi-ken (JP); Sakai, Koichi, Kariya-shi, Aichi-ken (JP); Shuuitsu, Isogai, Kariya-shi, Aichi-ken (JP); Kato, Masanao, Kariya-shi, Aichi-ken (JP)
(74) Representative: Pellmann, Hans-Bernd, Dipl.-Ing.

(57) **Abstract**

Pair of columns 3 and 4 are provided on a bed so as to be movable in a approach and separate direction to each other. On inside surfaces facing with the columns 3 and 4 to each other, there are respectively arranged tool spindles 32 and 32' which are movably guided in one of first and second directions mutually perpendicular to a first direction that is a moving direction of the columns 3 and 4. Each of the tool spindles 32 and 32' performs machining operations with respect to a common worktable by independently moving in the three directions mutually perpendicular to each other. Upper-lower covers 50 are intentionally arranged in a front of each of the columns 3 and 4 by upper and lower winders 52 and 53 so as to cover the front of each of the columns 3 and 4. Further, a cover apparatus 60 is intentionally arranged between the columns 3 and 4.

## Description

### BACKGROUND OF THE INVENTION

### Field of the Invention:

The present invention relates to a machine tool suitable to a transfer machine, in which two tool spindle heads independently movable in three axis directions mutually perpendicular to each other are provided.

### Description of the Related Art:

It is known such a machine tool that rotatably supports two tool spindles respectively provided on spindle heads in parallel to each other. This type machine tool will be referred hereinafter to as "a machine tool with two tool spindles," in which same machining operations are simultaneously performed into two same workpieces mounted on a worktable by two cutting tools, respectively.

On the other hand, it is further known such a machine tool wherein each of two spindle heads which rotatably supports a tool spindle and is arranged so as to face with each other is independently moved on respective guide mechanisms arranged in parallel with each other. As described in Japanese Patent Publication (***Kokai***) No. H8-90386, that type machine tool will be referred hereinafter to as "a machine tool with two spindle heads."

It is however impossible that the aforementioned "machine tool with two tool spindles" performs different machining operations into different portions of the workpiece at the same time. With this construction, it is possible to efficiently machine a lot of workpieces in a same category. However, such a machine tool with two tool spindles cannot efficiently machine each of workpieces in plural different categories, so that a general-purposefulness (e.g., generality) of the machine tool can be reduced.

On the other hand, the two spindle heads are arranged so as to face with each other in the above-described "machine tool with two spindle heads", so that the workpiece is transferred between the two spindle heads, whereby an operation area of an operator is formed therebetween. Due to such a configuration, as disclosed in Japanese Patent Publication No. H8-90386 above, it must be taken such a type that the workpiece is transferred between the both spindle heads by a movement of the worktable after the workpiece has been attached thereto at a position separated from the both spindle heads. A worktable moving type thus constructed is not suitable to a transfer machine such that a plurality of machine tools are connected in a transfer direction of the workpiece by a transfer apparatus.

Further, in a case of arrangement of the "machine tool with two spindle heads" as described above, it is required to respectively provide expensive cover apparatuses with feed mechanisms and guide portions which are arranged at each portions of the machine tool.

### SUMMARY OF THE INVENTION

Accordingly, an object of the present invention is to solve the above mentioned problems and is to provide a machine tool suitable to a transfer machine in which two spindle heads are respectively arranged on columns movably mounted on a bed.

Another object of the present invention is to provide cover apparatuses which can efficiently cover driving sections and guide portions of a machine tool with two spindle heads.

Briefly, according to the present invention, first tow slides are movably provided on a bed in a first direction, and two second slides are movably provided on the first slides in a second direction perpendicular to the first direction, respectively. On each of the second slides, there is movably provided a spindle head in a third direction mutually perpendicular to the first and second directions to rotatably support a tool spindle. Feed mechanisms are provided to respectively drive the first slides, the second slides and the two spindle heads, and a worktable is arranged at an intermediate position between the first slides and provided in the front of the two spindle heads to machine and mount a workpiece thereon.

With this construction, the tool spindle can be independently fed in the three directions mutually perpendicular to each other, so that two machining operations can be performed into the workpiece mounted on the worktable by the independent two tool spindles.

In addition to the above-described construction, each of the feed mechanisms for the spindle heads is composed of a feed screw mechanism and is arranged in parallel with a rotational axis of the tool spindle at a certain position downwardly separated from the tool spindle so as to reduce an overhang amount of each of the spindle heads. By the added feature, since a width of the second slide (also the first slide) can be made small, a rigidity of a machine tool can be made large as a whole. Further, it is possible to compact the machine tool as a whole by such a feature, so that an effective moving area of the spindle head can be made large and so that machining operations can be performed into close portions of the workpiece simultaneously.

Further, each of the first slides is constructed by a vertical column including a vertical member, a lower end member and an upper end member, and the lower member and the upper member are configured to be protruded from the vertical member toward the other of the first slides and to take the form of a rectangular shape that is opened toward the other of the first slides. In such a construction, a connecting member that connects the lower member of the first slide with the upper member thereof. Therefore, a rigidity of the vertical column can be further made strong.

A cover apparatus is further provided between the two first slides so as to be always wound by winder arranged at least one of the two first slides. Accordingly, the front surface of the machine tool can be covered by the cover apparatus regardless of a relative movement between the two first slides, so that each of driving portions of the machine tool can be protected from cutting chips, coolant and the like even if an expensive cover apparatus is not provided.

In addition, upper cover and lower cover are arranged in a front of each of the first slides, which are respectively configured to be wound by winders provided on the first slides. In such a construction, the cover apparatus, the upper cover and the lower cover are disposed within a generally same plane perpendicular to the rotational axis of the tool spindle. Therefore, the cover apparatus can cover between the two first slides and the front of the first slides can be respectively covered by the upper and lower covers, so that the front of the machine tool can be perfectly covered as a whole regardless of any movement of the spindle head.

### BRIEF DESCRIPTION OF THE ACCOMPANYING DRAWINGS

Various other objects, features and many of the attendant advantages of the present invention will be readily appreciated as the same becomes better understood by reference to the following detailed description of the preferred embodiments when considered in connection with the accompanying drawings, in which:
FIG. 1 is a top plane view showing a machine tool with two spindle heads according to the present invention;
FIG. 2 is a cross-sectional view taken along with arrows II-II in Fig. 1;
FIG. 3 is a cross-sectional view taken along with arrows III-III in Fig. 1; and
FIG 4 is a perspective view of a left column shown in Fig. 3.

### DETAILED DESCRIPTION OF THE PREFERRED EMBODIMENTS

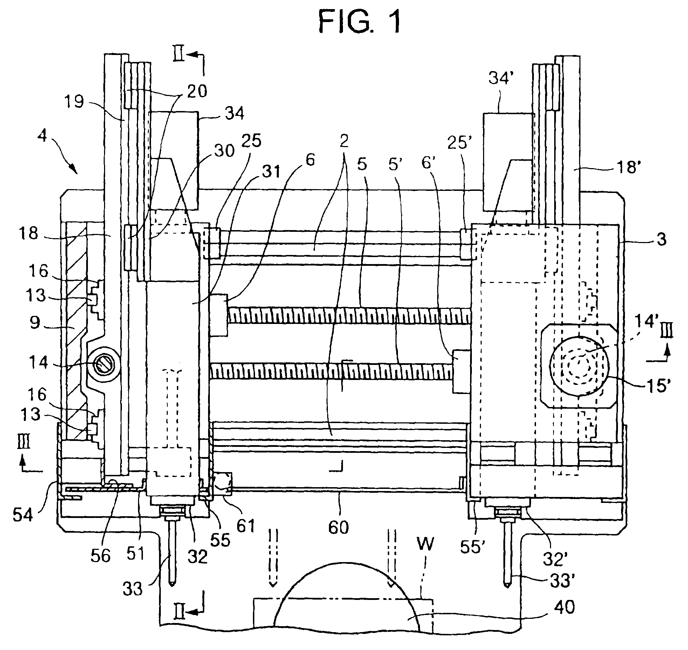

An embodiment according to the present invention will be described hereinafter with reference to Figs. 1-4.

A machine tool with two spindle heads according to the embodiment of the present invention is an example applied to a horizontal machine tool. In the embodiment, right and left columns 3 and 4 are arranged movably in a lateral direction (an X-axis direction) along a pair of guide rails 2 that is a common straight guide face laterally provided on a bed 1 so as to approach and separate with each other.

Although there are different constructions in the right and left columns 3 and 4, differences therebetween are symmetrically same in construction because the pair of right and left columns 3 and 4 is symmetrically formed. Each of the columns 3 and 4 is composed of a vertical member, an upper end member and a lower end member, so that a hollow portion is defined thereby. In the hollow portion, there is supported a main spindle saddle 18 movably in a vertical direction (an Y-axis direction), in which a spindle head is provided with a tool spindle. On the spindle saddle 18, the spindle head 30 rotatably holding the tool spindle 32 is movably guided in a backward-and-forward direction (a Z-axis direction) within a horizontal plane. Accordingly, the two tool spindles 32 are provided movably in mutually perpendicular three directions of a first direction that is the lateral direction (X-axis direction), a second direction that is the vertical direction (Y-axis direction) and a third direction that is the backward-and-forward direction (Z-axis direction).

Further, in a front portion of the bed 1, a worktable 40 is arranged at an intermediate position between the both columns 3 and 4 to support workpiece W at its fixed position. It may be adopted as the worktable 40 such an index table that can rotatably index the workpiece W.

Since the pair of the left and right columns 3 and 4 are formed symmetrically and the construction thereof is symmetrically same, the explanation about the left column 4 will be described hereinafter as referring to the drawings of the right column 3 also. Besides," '(apostrophe)" is suffixed to reference number in the same portion of the right column 3 as that of the left column 4.

The left column 4 is composed of a left side vertical member 9, a lower end member 10 and an upper end member 11, in which a hollow portion 12 is defined thereby. Since a right side portion, a front portion and a rear portion of the hollow portion 12 are opened, the column 4 takes the form of a rectangular shape that the lower end member 10 and the upper end members 9 project from the vertical member 9 toward the column 3. At the back of an inner side (the right side portion) of the column 4, there is provided a connection member 25 connecting the lower end member 10 with the upper end member 11 to make a rigidity of the column 4 stronger. A pair of guide rails 13 are vertically arranged on an inner surface of the vertical member 9 of the left side column 4, along which the spindle saddle 18 is slidably guided in the vertical direction (Y-axis direction) by four guide bearings 16. The spindle saddle 18 is fed in the Y-axis direction by a ball nut 17 which is threadedly engaged with a Y-axis direction feed screw 14 that is rotated by a motor 15 mounted on the upper end member 11 of the column 4.

The spindle saddle 18 is formed so as to extend in the backward-and-forward direction within the horizontal plane, in which upper and lower guide rails 19 are arranged in the backward-and-forward direction on an inside surface of the spindle saddle 18. Along the guide rails 19, the spindle head 30 extending in the Z-axis direction is movably supported in the backward-and-forward direction.

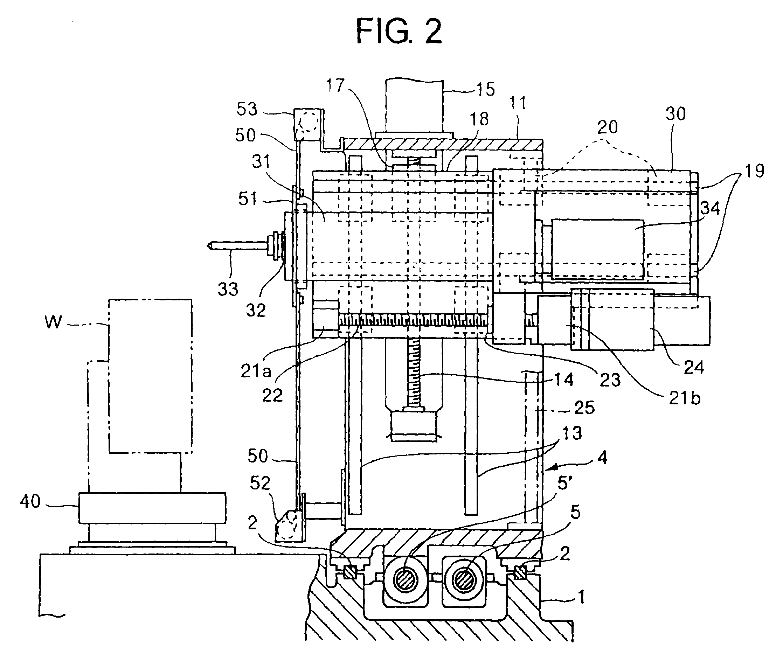

The spindle head 30, as shown in Fig. 2, is composed of a supporting member of at a rear portion thereof and a front member 31 that take the form of a square in its sectional view. Further, the spindle head 30 is slidably guided onto the guide rails 19 by four guide bearings 20 provided on the supporting member at the rear portion thereof. In a lower portion of the spindle saddle 18, a backward-and-forward direction (Z-axis direction) feed screw 22 is supported by a bracket 21a at a front end portion of the spindle saddle 18 and a bracket 21b at a rear end portion thereof. Further, a Z-axis direction feed motor 24 is attached onto a rear portion of the spindle saddle 18. A ball nut 23 threadedly engaged with the Z-axis direction feed screw 22 is arranged at a front end portion of the supporting member of the spindle head 30, i.e., at an edge portion between the supporting member and the sectional square shaped member 31. Accordingly, the spindle head 30 is movable in the backward-and-forward direction by the Z-axis direction feed screw 22.

The Z-axis direction feed screw 22 is arranged at a position separated from the spindle head 30 in the vertical direction that is a moving direction of the spindle saddle 18. In other words, the Z-axis direction feed screw 22 is arranged at a lower position of the spindle head 30 in parallel with the tool spindle 32. With such a construction, it is possible to make small an overhang amount of the spindle head 30 in the lateral direction with respect to the spindle saddle 18. Further, it can be so constructed to make small a width of the spindle saddle 18 in the lateral direction by this construction. Accordingly, it can be also constructed to make small a width of the column 4 in the lateral direction to support the spindle saddle 18 inside of the column 4. As a result of such a construction, it is possible to make small an approach position between the left column 4 and the right column 3.

The tool spindle 32 is rotatably supported on the spindle head 30, to which the cutting tool 33 is attachable on a front portion of the spindle head 30 and also which is rotatably driven by a driving motor 34 mounted on a rear portion of the spindle head 30.

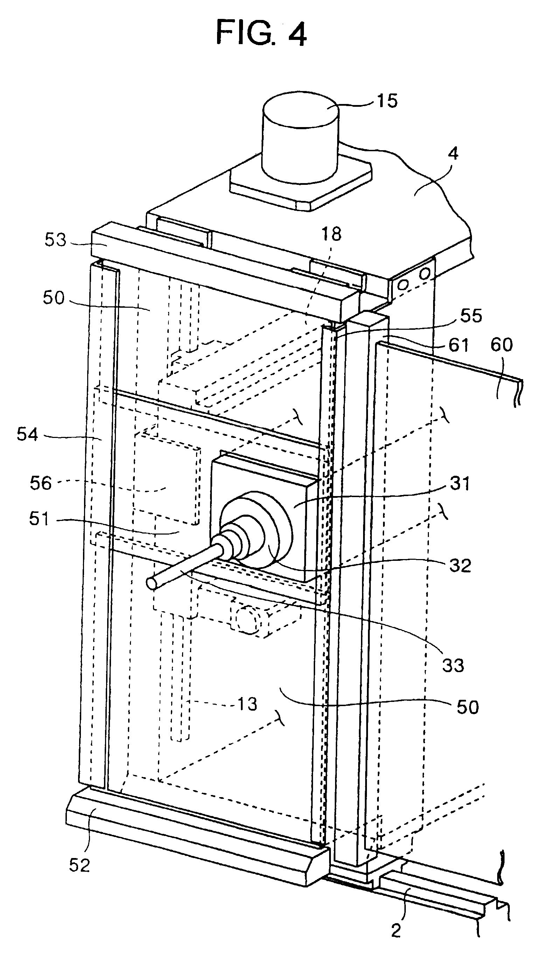

In the machine tool with two spindle heads according to the present invention, there is provided a protection cover apparatus so as to separate driving section of the machine tool from the machining area outside thereof, as can be understood with reference to Fig. 4. With this configuration, the immersion of cutting chips and coolant from the machining area to the driving section of the machine tool can be prevented even if the two spindle heads move.

First, cover guides 54 and 55 in the form of an L-letter shape are vertically provided at left and right side portions in the front of the column 4. Further, a guide plate 51 with a hole taking the form of a square in its sectional view, is attached to an L-letter shaped member 56 provided on a front end portion of the spindle saddle 18. Therefore, both ends of the guide plate 51 can be vertically moved inside of the L-letter shaped cover guides 54 and 55 respectively fixed on the both sides of the column 4. The sectional square shaped member 31 of the spindle head 30 is slidably fitted into the sectional square shaped hole which formed in the guide plate 51 fixed in the front of the spindle saddle 18. Further, end portions of upper-lower covers 50 are respectively secured to upper and lower portions of the guide plate 51. On the other hand, the other end portions of the upper-lower cover 50 are secured to cover winders 52 and 53 which are provided on lower and upper portions in the front of the column 4 via brackets, respectively. Therefore, it is so constructed that the upper-lower covers 50 can be always wound by the respective cover winders 52 and 53.

In such a construction, if the spindle head 30 moves vertically, the guide plate 51 fixed on spindle saddle 18 is also moved along with a movement of the spindle head 30. Further, the upper-lower covers 50 are moved along with a movement of the guide plate 51, so that the front surface of the column 4 can be always covered thereby. On the other hand, in a case that the spindle head 30 is advanced and retracted, the sectional square portion 31 thereof can move freely in the sectional square shaped hole of the guide plate 51.

As shown in Figs. 1 and 4, a wind type cover 60 is also provided between the both of right column 3 and left column 4. Even if a width between the column 3 and the column 4 is changed by a relative movement of the columns 3 and 4, the wind type cover 60 intentionally wound by a winder 61 is disposed between the machine tool and the machining area close to the workpiece W. Accordingly, guide portions, driving portions of the machine tool and the like can be protected from hitting of the cutting chips and coolant. The lateral wind cover 60 and the upper-lower covers 50 are provided within a generally same plane in the front of the machine tool, so that it is convenient to perform operations of the machine tool and to handle the workpiece W and the cutting chips.

Next, the explanation about the wind type covers provided between the both right and left columns 3 and 4 will be described hereinafter in detail. One end of the wind cover 60 from the lower end to the upper end throughout the right column 3 is secured to an L-letter shaped cover guide 55' fixed on a front left end portion of the right column 3. On the other hand, the other end of the wind cover 60 is connected to the cover winder 61 which is vertically attached on the L-letter shaped cover guide 55 arranged at a front right end portion of the left column 4. As mentioned above, the guide portions and feeding mechanisms of the machine tool can be protected from the cutting chips, coolant and the like even if an expensive cover apparatus is not arranged.

Besides, in this embodiment, any cover apparatus is not provided on an upper portion between the both columns 3 and 4. If necessary, it may however be possible to arrange a wind cover apparatus having the same construction as that in this embodiment.

The operation of the machine tool with two spindle heads according to the present invention will be described hereinafter in detail.

The machining preparation is completed when the cutting tools 33 and 33' have been respectively attached to the two tool spindles 32 and 32' and when the workpiece W has been mounted on the worktable 40.

In such a situation, the two tool spindles 32 and 32' to which the two cutting tools 33 and 33' are attached, can be fed along the guide rails 2 fixed on the bed 1, in the lateral direction (X-axis direction) that is the first direction, by the columns 3 and 4 (first slides) which can approach and separate to each other, respectively. Further, the spindle heads 33 and 33' on the both columns 3 and 4 are respectively movable in the vertical direction (Y-axis direction) by the spindle saddles 18 and 18' (second slides) which can move in the vertical direction that the second direction perpendicular to the first direction (X-axis direction). Furthermore, the two spindles 32 and 32' can be respectively fed in the backward-and-forward direction (Z-axis direction) that is the third direction mutually perpendicular to the first direction (X-axis direction) and the second directions (Y-axis direction) by the spindle heads 30 and 30' (third slides) which are movable on the spindle saddles 18 and 18' in the backward-and-forward direction within the horizontal plane.

For movements in the three axis directions, there is provided a feed screw in each which is rotated by the independent servomotor. Usually, the servomotor for each feed screws can be controlled by a sole control unit having six control axes or by a pair of control units respectively having three control axes, such a numerical control unit. Therefore, each feed motion of the slides can by controlled independently.

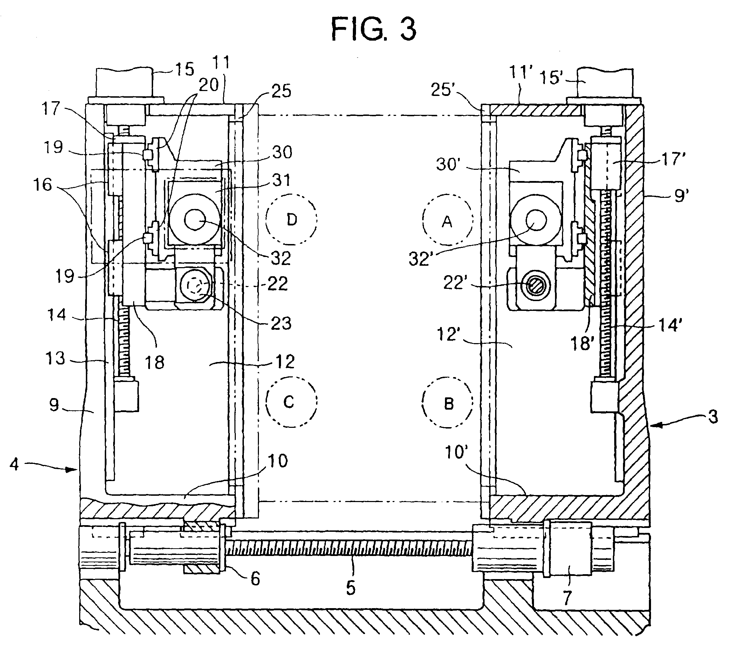

The both tool spindles 32 and 32' are arranged in parallel to each other with respect to rotational axes thereof, which moving areas are presented by A, B, C and D in Fig 3. Within the moving areas, each of the two tool spindles 32 and 32' is fed independently, so that different portions of the same workpiece W can be machined simultaneously thereby. On the other hand, when the servomotors with respect to each of the two tool spindles 32 and 32' can be simultaneously controlled by the same program, the same machining operations can be performed to the different portions of the same workpiece W by the two cutting tools of the left and right spindle heads. Further, in a case that two same workpieces are attached on the worktable 40, the same machining operations can be respectively performed to the different portions of the two same workpieces simultaneously.

Especially, when one of the tool spindles, e.g., 32', is at rest stopped at an original position in Fig. 3 due to a breakdown and the like, the other tool spindle 32 can carry out the machining operation complementarily of the cutting tool of the tool spindle 32'.

Besides, it can be utilized as a worktable 40 fixing the workpiece W such a rotary table in response to its necessity, so that a higher level or complex machining operation can be performed to the workpiece W thereby.

Further, in this embodiment according to the present invention, the tool spindle itself can move in the three axis directions mutually perpendicular to each other and the workpiece is machined at a fixed position on the worktable. Therefore, it is suitable to use the machine tool with two spindle heads as that is built in a transfer line. In such a situation, the workpiece is transferred in a direction perpendicular to the tool spindle, i.e., in the lateral direction in Fig. 1.

According to the embodiment of the present invention, an automatic tool changer can be arranged onto each of the two spindle heads. In such a construction, the automatic tool changers can be respectively provided on right and left upper portions in the front of the columns 3 and 4, so that the tool can be changed after the spindle head is moved to a position where the tool changer is arranged.

### [Modification]

In the aforementioned embodiment, it is so constructed such a horizontal machine tool in which a tool spindle is horizontally supported. However, the present invention may be adopted to such a vertical machine tool in which a tool spindle is vertically supported, similarly to a construction such a horizontal machine tool according to the embodiment.

Further, the moving directions of the second and third slides may be changed to each other.

Obviously, numerous modifications and variations of the present invention are possible in light of the above teachings. It is therefore to be understood that within the scope of the appended claims, the present invention may be practiced otherwise than as specifically described herein.

Pair of columns 3 and 4 are provided on a bed so as to be movable in a approach and separate direction to each other. On inside surfaces facing with the columns 3 and 4 to each other, there are respectively arranged tool spindles 32 and 32' which are movably guided in one of first and second directions mutually perpendicular to a first direction that is a moving direction of the columns 3 and 4. Each of the tool spindles 32 and 32' performs machining operations with respect to a common worktable by independently moving in the three directions mutually perpendicular to each other. Upper-lower covers 50 are intentionally arranged in a front of each of the columns 3 and 4 by upper and lower winders 52 and 53 so as to cover the front of each of the columns 3 and 4. Further, a cover apparatus 60 is intentionally arranged between the columns 3 and 4

## Claims

1. A machine tool comprising:
a pair of first slides movable in a first direction along a straight surface provided on a bed so as to approach and separate to each other;
two second slides movable in a second direction perpendicular to the first direction and provided on each of said first slides;
two spindle heads provided on each of said second slides and movable in a third direction mutually perpendicular to the first and second directions;
two tool spindles rotatably supported on each of said two spindle heads around rotational axes thereof;
feed mechanisms that respectively drive said first slides, said second slides and said two spindle heads, and
a worktable arranged at an intermediate position between said first slides and provided in the front of said two spindle heads, on which a workpiece to be machined is mounted.

2. A machine tool according to Claim 1, wherein each of said feed mechanisms for said spindle heads is composed of a feed screw mechanism and is arranged in parallel with the rotational axis of said tool spindle at a certain position downwardly separated from said tool spindle so as to reduce an overhang amount of each of said spindle heads.

3. A machine tool according to Claim 2,
wherein each of said first slides is constructed by a vertical column including a vertical member, a lower end member and an upper end member, the lower member and the upper member are configured to be protruded from the vertical member toward the other of said first slides and to take the form of a rectangular shape that is opened toward the other of said first slides; and further comprising:
a connecting member that connects the lower member of said first slide with the upper member thereof to make a rigidity of the vertical column strong.

4. A machine tool according to Claim 1, further comprising:
a cover apparatus provided between a pair of said first slides and always wound by winder arranged at least one of said first slides so as to change a cover area in response to a width therebetween.

5. A machine tool according to Claim 4, further comprising:
upper cover and lower cover arranged in a front of each of said first slides, said upper cover and said lower cover are respectively configured to be wound by winders provided on said first slides; and
wherein said cover apparatus, said upper cover and said lower cover are disposed within a generally same plane perpendicular to the rotational axis of said tool spindle.

6. A machine tool comprising:
a bed;
a first tool spindle provided on said bed and movable in three direction mutually perpendicular to each other; and
a second tool spindle provided on said bed and movable in three direction mutually perpendicular to each other;
wherein a rotational axis of said first tool spindle is disposed in parallel with that of said second tool spindle, which rotational axis is parallel to one of the three axis direction.

7. A machine tool according to Claim 7, further comprising:
a cover apparatus arranged within a generally same plane perpendicular to the rotational axis and wound in the other two of the three axis directions by winders respectively provided on said first tool spindle and said second tool spindle.
